## Europäisches Patentamt
## European Patent Office
## Office européen des brevets

(19)

(11) Numéro de publication: **0 197 858**
**B1**

(12)
# FASCICULE DE BREVET EUROPÉEN

(45) Date de publication du fascicule du brevet:
29.06.88

(51) Int. Cl.⁴: **B 62 D 55/116,** B 60 G 17/04

(21) Numéro de dépôt: 86400711.7

(22) Date de dépôt: 02.04.86

(54) Correcteur de garde au sol pour élément de suspension d'un véhicule lourd.

(30) Priorité: 03.04.85 FR 8505064

(43) Date de publication de la demande:
15.10.86 Bulletin 86/42

(45) Mention de la délivrance du brevet:
29.06.88 Bulletin 88/26

(84) Etats contractants désignés:
DE GB IT

(56) Documents cité:
EP-A-0 090 154
US-A-3 352 565
US-A-3 459 439
US-A-3 528 114

(73) Titulaire: S.A.M.M.- Société d'Applications des Machines Motrices, Chemin de la Malmaison, F-91570 Bièvres (FR)

(72) Inventeur: Joseph, Philippe, Quartier le Dègues Loriot du Comtat, F-84200 Carpentras (FR)

(74) Mandataire: Bressand, Georges, c/o CABINET LAVOIX 2 Place d'Estienne d'Orves, F-75441 Paris Cedex 09 (FR)

## Description

La presente invention a pour objet un correcteur de garde au sol pour élément de suspension d'un véhicule lourd selon les caractéristiques du préambule de la revendication 1 (voir US-A- 3 459 439).

La demande de brevet EP-A-0 197 859 au nom de la Demanderesse, déposée le même jour que la présente demande et ayant pour titre "Elément de suspension pour véhicule lourd" décrit un élément de suspension comportant un bras traversé par une fusée de roue du véhicule, articulé rotativement sur une partie fixe solidaire du châssis du véhicule avec interposition de moyens de roulement entre cette partie fixe et le bras rotatif. Une chambre hydraulique est ménagée dans le bras et contient un piston coulissant sur lequel est articulée une bielle dont l'extrémité opposée au piston est de son côté articulée sur la partie fixe, cette dernière présentant un volume intérieur concentrique à l'axe de la partie fixe solidaire du châssis du véhicule.

Le correcteur de garde au sol visé par l'invention est destiné à être placé dans ce volume intérieur au logement, afin d'asservir constamment la garde au sol du châssis du véhicule à une valeur préréglée, et ce quel que soit le profil du terrain sur lequel évolue le véhicule.

Suivant l'invention, le correcteur de garde au sol est un distributeur hydraulique comportant un tiroir monté rotatif dans un corps disposé dans ledit logement, ce tiroir traverse une chemise dans laquelle est formé, ainsi que dans le corps, un circuit hydraulique permettant d'introduire ou de retirer du liquide hydraulique dans la chambre du piston en fonction de la position angulaire du tiroir dans la chemise, la position angulaire de cette dernière dans le corps déterminant une valeur préréglée de la garde au sol du châssis du véhicule, et le tiroir est équipé de moyens de commande en rotation associés au bras et au châssis, l'ensemble étant réalisé de façon à asservir automatiquement la garde au sol à la valeur préréglée par la position angulaire de la chemise.

Suivant un mode de réalisation du correcteur conforme à l'invention, le tiroir coopère avec deux pistons montés coulissants dans des chambres hydrauliques correspondantes de la chemise, qui, d'une part communiquent chacune avec un clapet élastiquement sollicité sur son siège en position de fermeture d'un conduit reliant les deux clapets, et d'autre part sont reliées entre elles par une canalisation, les clapets élastiques étant pourvus de tiges élastiquement poussées en appui contre le tiroir de chaque côté de ce dernier, de manière à le maintenir normalement en position médiane, et les deux pistons précités sont également pourvus chacun d'un élément d'appui de chaque côté du tiroir, l'ensemble de ce circuit d'asservissement hydraulique étant agencé de telle sorte qu'une rotation du tiroir dans un sens ou dans l'autre provoque successivement un déplacement de l'un des pistons l'ouverture d'un clapet contre son organe élastique de rappel et une circulation du fluide hydraulique dans le conduit et la canalisation par le clapet ouvert, et la pression hydraulique ainsi exercée ouvre le second clapet puis ramène le piston ainsi que de ce fait le tiroir à leurs positions initiales.

Des moyens sont également prévus pour filtrer les oscillations rapides lorsque le véhicule passe sur une bosse ou sur un creux du terrain, de sorte que de telles oscillations rapides ne dérèglent pas la garde au sol du véhicule.

Ce correcteur est avantageusement logé dans le volume intérieur de la partie fixe de l'élément de suspension, ce qui diminue l'encombrement général de celui-ci par rapport aux réalisations connues.

D'autres particularités et avantages de l'invention apparaîtront au cours de la description qui va suivre, faite en référence aux dessins annexés qui en illustrent à titre d'exemple non limitatif un mode de réalisation.

- la Figure 1 est une vue en coupe longitudinale avec élévation partielle d'un mode de réalisation de l'élément de suspension dans lequel peut être monté le correcteur visé par l'invention.
- la Figure 2 est une vue en coupe transversale suivant II-II de la Figure 1;
- la Figure 3 est un schéma du circuit hydraulique général du correcteur de garde au sol conforme à l'invention et de ses moyens d'asservissement à une valeur préréglée de la garde au sol;
- la Figure 4 est une vue en coupe axiale, à échelle agrandie par rapport à la Figure 2, d'un mode de réalisation du correcteur de garde au sol selon l'invention:
- la Figure 5 est une vue en coupe transversale du correcteur suivant V-V de la Figure 4;
- la Figure 6 est une vue en coupe transversale suivant VI-VI de la Figure 4;
- la Figure 7 est une vue en coupe transversale analogue à la Figure 6 montrant l'état du circuit d'asservissement hydraulique du tiroir après une rotation de celui-ci d'un angle déterminé;

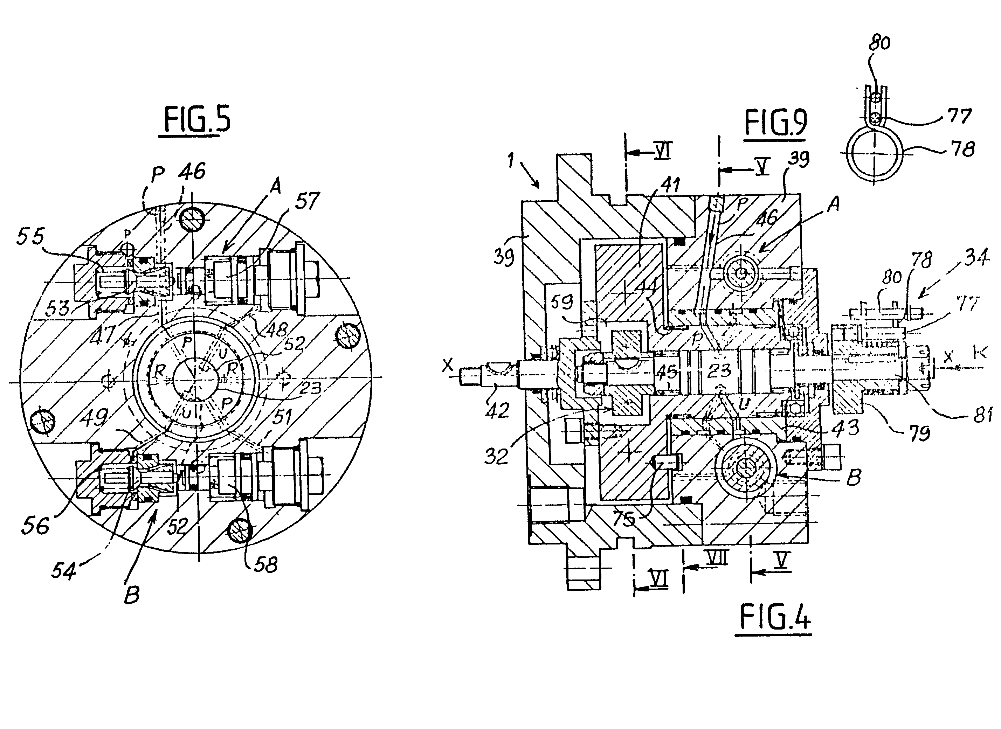

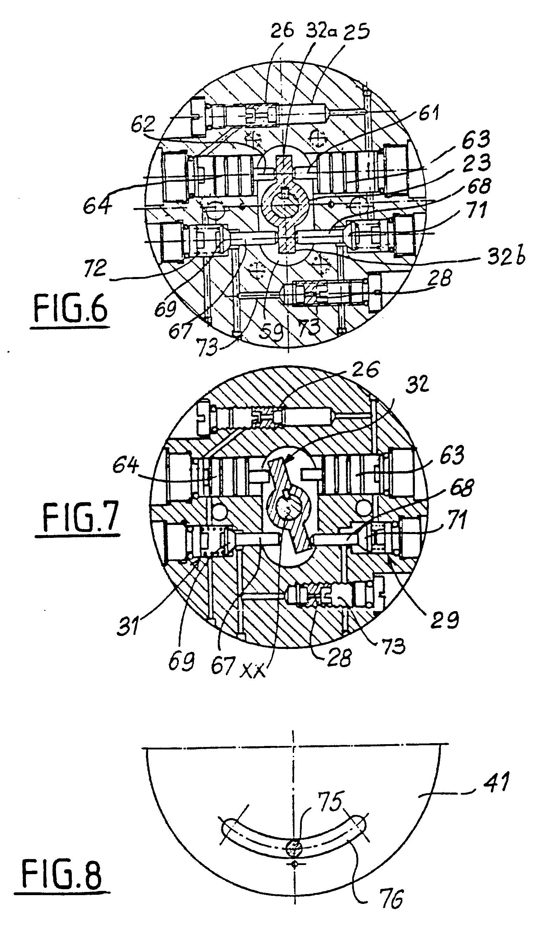

- la Figure 6 est une section transversale suivant VII de la Figure 4;
- la Figure 9 est une vue en élévation en bout du tiroir suivant la flèche K de la Figure 4.

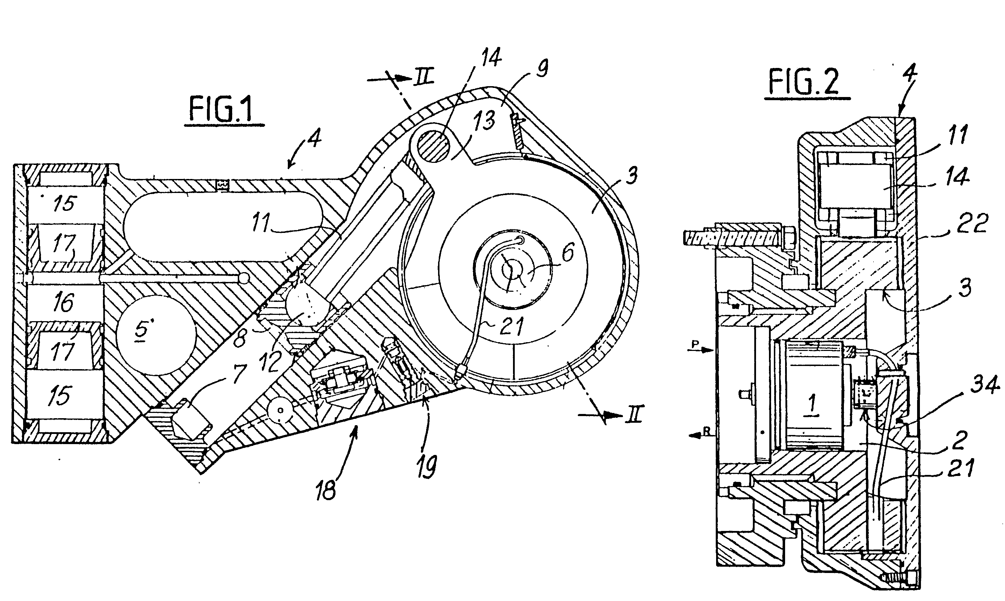

Les Figures 1 et 2 représentent un élément de suspension pour véhicule lourd tel que décrit dans la demande de brevet précitée déposée le même jour que la présente demande par la Demanderesse. Mais ces Figures 1 et 2 montrent en outre le correcteur 1 de garde au sol logé dans un volume intérieur 2 d'une partie fixe 3 de cet élément, cette partie fixe étant solidaire du châssis (non représenté) du véhicule.

L'élément de suspension comporte par ailleurs un bras 4 traversé par une fusée de roue 5 (la roue n'étant pas représentée) et articulé rotativement sur la partie fixe 3, laquelle est coaxiale à un axe 6 relié au châssis. Une chambre hydraulique 7 est ménagée dans le bras 4 et contient un piston 8 coulissant qui sépare la chambre 7 d'un logement 9. Une bielle 11 est articulée d'une part dans le piston 8 par une rotule 12 et d'autre part par un axe 14 sur une patte 13 solidaire de la partie fixe 3. Le bras 4 est également muni de deux chambres de gaz 15 séparées d'une chambre hydraulique 16 par deux pistons librement coulissants 17 et est équipé d'un amortisseur 18 ainsi que d'un clapet d'isolement 19 connu en soi et relié à l'amortisseur 18.

Tous ces organes ainsi que leur circuit hydraulique d'alimentation sont décrits en détail dans la demande de brevet précitée, de sorte que leur description ainsi que leur fonctionnement ne seront pas à nouveau repris ici.

Le circuit hydraulique de cet élément de suspension est alimenté en liquide hydraulique par une source de pression non représentée, et qui alimente également en liquide hydraulique sous pression une tuyauterie 21 disposée radialement à la partie fixe 3 et au correcteur 1 et qui débouche dans ce dernier.

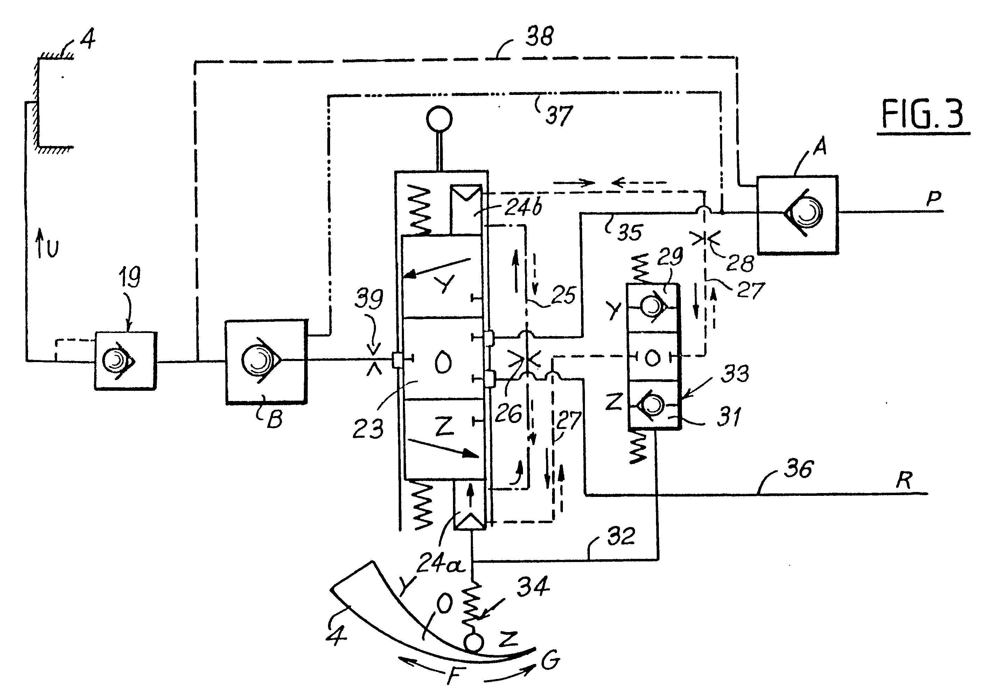

On décrira maintenant en se référant à la Figure 3 le schéma hydraulique général du correcteur 1 conforme à l'invention.

Ce correcteur comprend un tiroir 23 associé à deux pistons latéraux 24a, 24b reliés entre eux tout d'abord par une canalisation 25 pourvue d'un étranglement 26, et en second lieu par une deuxième canalisation 27 sur laquelle sont placés un étranglement 28 ainsi que deux clapets élastiques 29, 31 en opposition l'un avec l'autre. Une liaison rigide 32 est réalisée entre les clapets 29, 31 qui forment un second tiroir 33, tandis que le tiroir 23, est relié au bras 4 par des moyens de commande élastique 34. Le tiroir 23 est d'autre part relié à la source de pression hydraulique P par une conduite 35 sur laquelle est disposé un clapet A, à la bâche R par une canalisation 36 et à l'utilisation U, c'est-à-dire à la chambre hydraulique 7 par une canalisation équipée d'un clapet 8 et du clapet d'isolement 19, une liaison 37 assure la connexion entre le clapet B et la sortie du clapet A, et une liaison 38 relie ce dernier à un point situé entre les clapets B et 19, un étranglement 39 étant en outre prévu entre le clapet B et le tiroir 23.

Le repère 0 correspond à l'équilibre ou hauteur de référence, le repère Y correspond à un abaissement du véhicule et le repère Z correspond à une élévation du châssis du véhicule.

Le fonctionnement du correcteur schématiquement représenté sur la Figure 3 est le suivant:

Lorsque le châssis du véhicule s'abaisse, le bras 4 monte et pivote vers le bas dans le sens indiqué par la flèche F (zone Y), de sorte que les moyens de commande élastique 34 provoquent un déplacement du tiroir 23 vers le bas sur la Figure 3. Ce déplacement provoque une circulation de liquide hydraulique dans la canalisation 25, à partir de la chambre du piston 24a vers la chambre du piston 24b en traversant l'étranglement 26. Le tiroir 23 est donc poussé vers le bas à la vitesse donnée par l'étranglement 26. Après avoir parcouru un recouvrement de l'ordre du millimètre, il met en communication la pression d'alimentation P avec l'utilisation U. De ce fait, la suspension remonte le véhicule.

Remarquons que le distributeur à clapet 29 étant lui aussi vers le bas, l'huile de la chambre 24a n'a pu transiter vers la chambre 24b à travers la conduite à cause du clapet anti-retour 29.

Lorsque le véhicule remonte, le bras 4 se détend suivant la direction de la flèche G, ce qui amène l'huile de la chambre 24b à aller cette fois vers la chambre 24a par la conduite 25 et l'étranglement 26 d'une part, et la conduite 27, le clapet anti-retour 29 et l'étranglement 28 d'autre part. Ceci provoque une vidange plus rapide d'une chambre à l'autre, et donc un retour plus rapide du tiroir 23, de façon à éviter les pulsations du véhicule.

Lorsque le châssis du véhicule s'élève, et que par conséquent le bras 4 s'abaisse dans le sens de la flèche G (zone Z) il se produit la séquence inverse de celle décrite ci-dessus. Le tiroir du distributeur 23 prend la position Z lentement grâce à l'étranglement 26, puis revient rapidement à la position 0 grâce aux étranglements 26, 28 par l'intermédiaire du clapet 31 du distributeur 33 en position Z.

La garde au sol du véhicule est donc maintenue à la valeur à laquelle elle a été préréglée.

On décrira maintenant une forme de réalisation industrielle du correcteur 1 et de son schéma hydraulique en se référant aux Figures 4 à 9.

Le correcteur 1 illustré aux Figures 4 à 9 est un distributeur hydraulique comportant un tiroir 23 monté rotatif autour d'un axe X-X dans un corps 39 disposé dans le logement 2, ce tiroir 23 traversant une chemise 41 dans laquelle est formé, ainsi que dans le corps 39, un circuit hydraulique permettant d'introduire ou de retirer du liquide hydraulique dans la chambre 7 du piston 8, en fonction de la position angulaire du tiroir 23 dans la chemise 41. Cette dernière est solidaire d'une partie terminale axiale 42 dont l'extrémité fait saillie axialement à l'extérieur du corps 39, et dont la position angulaire dans le corps 39 détermine une valeur préréglée de la garde au sol du châssis du véhicule. Entre la chemise 41 et le corps 39 est interposé un manchon tubulaire 43, des joints circulaires assurant l'étanchéité entre ce dernier et le corps 39. Des roulements à aiguilles 44, 45 sont interposés respectivement entre le manchon 43 et la chemise 41, et entre cette dernière et le tiroir 23. Dans le corps 39 est ménagée une canalisation 46 qui communique avec la tuyauterie 21 d'alimentation en fluide hydraulique sous pression P, le clapet A étant logé dans le corps 39 sur le trajet de cette canalisation 46. Deux autres séries de canalisations 47, 48, ménagées dans le corps 39, le manchon 43 et la chemise 41 débouchent d'une part dans le clapet A, et d'autre part aboutissent au tiroir 23, au voisinage duquel elles sont référencées P et U sur les Figures 4 et 5. Par ailleurs, le clapet B, similaire au clapet A mais en position inversée par rapport à celui-ci est également logé à l'intérieur du corps 39 et communique avec deux canalisations 49, 51 formées dans le corps 39, le manchon 43 et la chemise 41, ces canalisations débouchant sur le tiroir 23 au voisinage duquel elles sont référencées respectivement U et P aux Figures 4 et 5. Le tiroir 23 est muni de deux méplats 52 diamétralement opposés et agencés de telle façon que la rotation du tiroir 23 d'un angle déterminé autour de l'axe X-X puisse mettre en communication d'une part les canalisations 47 et 48 et les canalisations 49, 51 (à la pression P d'alimentations). Dans la position angulaire du tiroir 23 illustrée à la Figure 5, les canalisations d'utilisation U sont isolées ces canalisations d'alimentation à la pression P.

Chaque clapet A, B est constitué de manière connue en soi par un clapet proprement dit 53, 54 élastiquement appliqué sur son siège par un ressort de rappel 55, 56, et par un dispositif à poussoirs 57, 58 qui peut être poussé contre le clapet correspondant 53, 54 par la pression hydraulique afin de l'ouvrir lorsque cette pression est suffisante.

Lorsque la pression d'utilisation U est suffisante, le poussoir 57 pousse ainsi le clapet 53 qui est maintenu ouvert. En cas de chute anormale de la pression d'utilisation U dans la chambre hydraulique 7, cette baisse de pression apparaît au niveau du poussoir 57, de sorte que le ressort 55 rappelle automatiquement le clapet 53 en position de fermeture, et que l'élément de suspension est isolé de la source de pression P. Le clapet A assure donc une fonction de sécurité à cet égard.

De son côté, le clapet B est normalement maintenu ouvert par la pression d'alimentation P dans la canalisation 51. En cas de chute brutale de cette pression P, le clapet 54 est autmatiquement rappelé en position de fermeture par son ressort 56 et ferme le clapet B, qui isole donc alors l'élément de suspension dans l'état où il se trouve à cet instant.

En se référant maintenant plus particulièrement aux figures 6 et 7 on voit que le tiroir 23 est muni d'une pièce terminale de commande 32 qui comporte deux ailes 32a, 32b faisant saillie radialement à l'intérieur d'un logement correspondant 59 de la chemise 41. Sur chaque face latérale de l'aile 32a prend appui une tige 61, 62 d'un piston correspondant 63, 64 monté coulissant dans une chambre hydraulique, ces deux chambres communiquant entre elles par la canalisations 25 dans laquelle est disposé l'étranglement 26, tous ces organes étant ménagés dans la chemise 41.

De son côté, l'aile 32b du tiroir 23 coopère par ses faces latérales avec les deux tiges 67, 68 de deux clapets 69, 71 disposés sur les côtés opposés de l'aile 32b et maintenus élastiquement appliqués sur leur siège par des ressorts de rappel respectifs 72, 73. Les logements des clapets 69, 71 communiquent respectivement avec les chambres des pistons 63, 64 et entre eux par une canalisation 73 munie de l'étranglement 28. L'ensemble de ce circuit d'asservissement est rempli de liquide hydraulique sous pression de gavage.

Pour limiter la rotation de la chemise 41 autour de l'axe X-X une particularité de l'invention prévoit des moyens de butée, constitués dans cet exemple par un pion 75 fixé interieurement au corps 39 et pouvant coulisser dans une gorge circulaire correspondante 76 formée dans la chemise 41 (Figures 4 et 8).

Les moyens élastiques 34 de commande en rotation du tiroir 23 comprennent deux doigts 80, 77 ( Figures 4 et 9) enserrés par un ressort 78 formant une boucle qui entoure une bielle 79 fixée à une extrémité 81 du tiroir 23 faisant saillie à l'extérieur du corps 39. Le doigt 80 est solidaire du bras 4 et du châssis du véhicule, tandis que le second doigt 77, est fixé à la bielle de commande 79 par engagement de son extrémité dans celle-ci (Figure 4). On comprend donc que la rotation du tiroir 23 peut être commandée, soit par le doigt 80, soit par le doigt 77.

Le fonctionnement du correcteur qui vient d'être décrit est le suivant:

Lorsque le bras 4 et le châssis du véhicule s'abaissent, le doigt 80 provoque la rotation du tiroir 23, par exemple dans le sens anti-horaire comme illustré à la Figure 7. De ce fait, l'aile 32a pousse la tige 62 du piston 64 qui coulisse dans son logement, tandis que l'aile opposée 32b décolle le clapet 71 de son siège, et que le clapet 69 reste fermé. Le liquide hydraulique est chassé par le piston 64 dans la canalisation 25 par l'étranglement 26, puis pénètre dans la chambre du piston 63 qui est repoussé, le clapet 69 étant maintenu fermé.

De ce fait, le mouvement de la pièce 32 entraînant le tiroir 23 met alors en communication la pression P avec l'utilisation U (Figure 4). Le châssis s'élevant, le tiroir 23 revient en position neutre rapidement grâce au by-passage de l'huile de la chambre du piston 63 à la chambre du piston 64 par l'étranglement 26 ainsi que par l'ajutage supplémentaire 28 et par le clapet 29 qui peut s'ouvrir, la pression s'étant inversée.

Si maintenant le bras 4 pivote vers le haut, il se produit une séquence inverse de la précédente. A ce moment, la garda au sol du châssis avant la rotation du tiroir 23 est rétablie.

Grâce à cet asservissement la garde au sol retrouve donc également dans ce cas sa valeur initiale.

L'invention n'est pas limitée au mode de réalisation décrit et peut comporter de nombreuses variantes d'exécution dans le cadre des revendications ci-après.

# Revendications

1. Correcteur de garde au sol pour élément de suspension d'un véhicule lourd du type comportant un bras (4) traversé par une fusée de roue (5) correspondante, articulé sur une partie (3) fixée au châssis du véhicule, et dans lequel est agencée une chambre hydraulique (7) contenant un piston (8) sur lequel est articulée une bielle (11) dont l'extrémité opposée au piston (8) est articulée sur ladite partie fixe (3) destiné à être placé dans un logement (2) aménagé intérieurement à la partie (3) de cet élément fixée au châssis du véhicule, caractérisé en ce que ce correcteur (1) est un distributeur hydraulique comportant un tiroir (23) monté rotatif dans un corps (39) disposé dans ledit logement (2) ce tiroir (23) traversant une chemise (41) dans laquelle est formée, ainsi que dans le corps, un circuit hydraulique permettant d'introduire ou de retirer du liquide hydraulique dans la chambre (7) du piston (8) en fonction de la position angulaire du tiroir (23) dans la chemise (41), la position angulaire de cette dernière dans le corps (39) déterminant une valeur préréglée de la garde au sol du châssis du véhicule, et le tiroir (23) est équipé de moyens (34) de commande en rotation associés au bras (4) et au châssis l'ensemble étant réalisé de façon à asservir automatiquement la garde au sol à la valeur préréglée par la position angulaire de la chemise (41).

2. Correcteur selon la revendication 1, caractérisé en ce que le tiroir (23) coopère avec deux pistons (63, 64) montés coulissants dans des chambres hydrauliques correspondantes de la chemise (41) qui, d'une part communiquent chacune avec un clapet (69, 71) élastiquement sollicité sur son siège en position de fermeture d'un conduit (73) pourvu d'un étranglement (28) reliant les deux clapets, et d'autre part sont reliées entre elles par une canalisation (25) les clapets élastiques étant pourvus de tiges (67, 68) élastiquement poussées en appui contre le tiroir (23) de chaque côté de ce dernier de manière à le maintenir normalement en position médiane, et les deux pistons précités (63, 64) sont également pourvus chacun d'un élément d'appui (61, 62) de chaque côté du tiroir (23), l'ensemble de ce circuit d'asservissement hydraulique étant agencé de telle sorte qu'une rotation du tiroir (23) dans un sens ou dans l'autre provoque successivement un déplacement de l'un des pistons (63, 64) et l'ouverture d'un clapet contre son organe élastique de rappel, de telle sorte que tout déplacement du tiroir (23) provoque une circulation contrôlée du fluide hydraulique dans ladite canalisation (25) et que seul le retour rapide en position du tiroir (23) provoque une circulation supplémentaire de fluide hydraulique contrôlée par le conduit (73) et son étranglement (28).

3. Correcteur selon la revendication 2, caractérisé en ce que chacune des canalisations (25, 73) de liaison entre les chambres hydrauliques (65, 66) et entre les clapets (69, 71) est munie d'un étranglement (26, 28) adapté pour filtrer les oscillations rapides du tiroir (23).

4. Correcteur selon l'une des revendications 1 à 3, caractérisé en ce que le tiroir (23) coopère avec les pistons (63, 64) et avec les tiges des clapets (69, 71) par des ailes saillantes (32a, 32b) radialement fixées à l'une de ses extrémités en formant une pièce terminale de commande (32), et sur les faces latérales opposées desquelles les tiges (67, 68) des clapets (69, 71) ainsi que des tiges (61, 62) solidaires des pistons (63, 64) viennent en appui, les pistons étant poussés vers ces faces d'appui par la pression hydraulique.

5. Correcteur selon l'une des revendications 1 à 4, caractérisé en ce que la chemise (41) est solidaire d'un axe (42) faisant saillie à l'extérieur du corps (39) et dont la position angulaire détermine une valeur préréglée de la garde au sol du véhicule, des moyens de butée étant en outre prévus pour limiter la rotation de la chemise (41), par exemple un pion (75) fixé intérieurement au corps (39) et qui coulisse dans une gorge circulaire (76) correspondante de la chemise (41).

6. Correcteur selon l'une des revendications 1 à 5, caractérisé en ce que les moyens (34) de commande en rotation du tiroir (23) comprennent deux doigts (80, 77) enserrés par un ressort (78), dont l'un (80) est solidaire du bras (4) et du châssis du véhicule tandis que le ressort (78) est fixé à l'extrémité correspondante du tiroir, de telle sorte que la rotation de ce dernier puisse être commandée par ces deux doigts (80, 77) et par le ressort (78) dans un sens ou dans l'autre.

7. Correcteur selon l'une des revendications 1 à 6, caractérisé en ce que, dans le corps (39) et dans la chemise (41) sont agencées des canalisations (46, 47, 48, 49, 51) reliant la source de pression hydraulique (P) à la chambre (7) du piston de l'élément de suspension associé au correcteur, et l'une (47, 48) de ces canalisations est équipée d'un clapet (A) normalement maintenu ouvert par la pression d'utilisation (U) dans la chambre hydraulique (7) et qui comporte des moyens (53, 55) commandant sa fermeture automatique en cas de chute anormale de cette pression d'utilisation (U), isolant dans ce cas l'élément de suspension de la source de pression.

8. Correcteur selon la revendication 7, caractérisé en ce que dans le corps (39) et dans la chemise (41) sont agencées des canalisations (49, 51) communiquant respectivement avec la chambre hydraulique (7) du piston (8) de l'élément de suspension et avec la source de pression (P), et qui débouchent dans un clapet (B) normalement maintenu ouvert par la pression (P) de la source hydraulique, et ce clapet (B) est équipé de moyens de fermeture automatique en cas de chute de la pression (P) dans la chambre hydraulique (7) de l'élément de suspension (P) de la source hydraulique.

## Patentansprüche

1. Niveauregulierungsvorrichtung für ein Aufhängungselement eines schweren Fahrzeugs mit einem Arm (4), der von einem entsprechenden Rad-Achsschenkel (5) durchsetzt ist, und an einem an dem Fahrgestell des Fahrzeugs befestigten Teil (3) angelenkt ist und in dem eine Hydraulikkammer (7) vorgesehen ist, die einen Kolben (8) enthält, an dem eine Pleuelstange (11) angelenkt ist, deren dem Kolben (8) entgegengesetztes Ende an dem feststehenden Teil (3) angelenkt ist, wobei die Niveauregulierungsvorrichtung in einer Kammer (2) angeordnet ist, die im Inneren des an dem Fahrgestell des Fahrzeugs befestigten Teils (3) dieses Elements vorgesehen ist, dadurch gekennzeichnet, daß die Niveauregulierunasvorrichtung (1) ein hydraulischer Verteiler ist, der einen Schieber (23) besitzt, der drehbar in einem in der Kammer (2) angeordneten Körper (39) montiert ist und eine Buchse (41) durchquert, in der ebenso wie in dem Körner ein Hydraulikkreis ausgebildet ist, der je nach der Winkelstellung des Schiebers (23) in der Buchse (41) die Zufuhr der Hydraulikflüssigkeit in die Kammer (7) des Kolbens (8) oder ihren Abzug aus dieser gestattet, wobei die Winkelstellung der Buchse in dem Körner (39) einen voreingestellten Wert der Bodenfreiheit des Fahrgestells des Fahrzeugs festlegt, und daß der Schieber (23) mit Einrichtungen (34) zu seinem Drehantrieb versehen ist, die mit dem Arm (4) und mit dem Fahrgestell verbunden sind, wobei die Vorrichtung 50 ausgebildet ist, daß die Bodenfreiheit automatisch auf den durch die Winkelstellung der Buchse (41) voreinqestellten Wert einreguliert wird.

2. Niveauregulierungsvorrichtung nach Anspruch 1, dadurch gekennzeichnet, daß der Schieber (23) mit zwei Kolben (63, 64) zusammenwirkt, die verschiebbar in entsprechenden Hydraulikkammern der Buchse (41) montiert sind, die einerseits jeweils mit einem Ventil (69, 71) in Verbindung sind, das elastisch auf seinen Sitz in die Stellung gedrückt ist, in der ein mit einer Drosselung (28) versehener und die beiden Ventile miteinander verbindender Kanal (73) geschlossen ist, und die andererseits miteinander durch eine Leitung (25) verbunden sind, daß die elastischen Ventile mit Stangen (67, 68) versehen sind, die elastisch auf jeder Seite des Schiebers (23) an diesen angedrückt sind, so daß er normalerweise in der Mittelstellung gehalten wird, und daß die beiden Kolben (63, 64) ebenfalls jeweils mit einen Element (61, 62) zur Anlage an jeder Seite des Schiebers (23) versehen sind, wobei dieser hydraulische Regelkreis so ausgebildet ist, daß eine Drehung des Schiebers (23) in der einen oder der anderen Richtung nacheinander eine Bewegung eines der Kolben (63, 64) und die Öffnung eines Ventils entgegen seinem elastischen Rückholorgan bewirkt, so daß jede Bewegung des Schiebers (23) einen gesteuerten Hydraulikfluidumlauf in der Leitung (25) bewirkt und nur die schnelle Rückkehr des Schiebers (23) in die Grundstellung einen zusätzlichen gesteuerten Hydraulikfluidumlauf über den Kanal (73) und seine Drosselung (28) bewirkt.

3. Niveauregulierungsvorrichtung nach Anspruch 2, dadurch gekennzeichnet, daß jeder der Verbindungskanäle (25, 73) zwischen den Hydraulikkammern (65, 66) und den Ventilen (69, 71) mit einer Drosselung (26, 28) versehen ist, die die schnellen Schwingungen des Schiebers (23) ausfiltert.

4. Niveauregulierungsvorrichtung nach einem der vorhergehenden Ansprüche, dadurch gekennzeichnet, daß der Schieber (23) mit den Kolben (63, 64) und mit den Stangen der Ventile (69, 71) über radial vorstehende Flügel (32a, 32b) zusammenwirkt, die an einem seiner Enden, das ein Betätigungsteil (32) bildet, befestigt sind und an deren einander entgegengesetzten Seitenflächen die Stangen (67, 68) der Ventile (69, 71) sowie mit den Kolben (63, 64) fest verbundene Stangen (61, 62) zum Anliegen kommen, wobei die Kolben an diese Auflageflächen durch den Hydraulikdruck angedrückt werden.

5. Niveauregulierungsvorrichtung nach einem der vorhergehenden Ansprüche, dadurch gekennzeichnet, daß die Buchse (41) mit einer Achse (42) fest verbunden ist, die aus dem Körper (39) herausragt und deren Winkelstellung einen voreingestellten Wert der Bodenfreiheit des Fahrzeugs festlegt, wobei Anschlagseinrichtungen zur Begrenzung der Drehung der Buchse (41) vorgesehen sind, die beispielsweise aus einem Bolzen (75) bestehen, der innen an dem Körper (39) befestigt ist und in einer entsprechenden kreisförmigen Nut (76) der Buchse (41) gleitet.

6. Niveauregulierungsvorrichtung nach einem der vorhergehenden Ansprüche, dadurch gekennzeichnet, daß die Einrichtungen (34) zum Drehantrieb des Schiebers (23) aus zwei von einer Feder (78) umschlossenen Bolzen (80, 77) bestehen, von denen der eine (80) mit dem Arm (4) und dem Fahrgestell des Fahrzeugs fest verbunden ist, während die Feder (75) an dem entsprechenden Ende des Schiebers befestigt ist, so daß dieser durch die beiden Bolzen (80, 70) und durch die Feder (78) in der einen oder der anderen Richtung in Drehung versetzt werden kann.

7. Niveauregulierungsvorrichtung nach einem der vorhergehenden Ansprüche, dadurch gekennzeichnet, daß in dem Körper (39) und in der Buchse (41) Kanäle (46, 47, 48, 49, 51) vorgesehen sind, die die Hydraulikdruckquelle (P) mit der Kammer (7) des Kolbens des der Niveauregulierungsvorrichtung zugeordneten Aufhängungselements verbinden, und daß einer (47, 48) der Kanäle mit einem Ventil (A) ausgerüstet ist, das normalerweise durch den Betriebsdruck (U) in der Hydraulikkammer (7) offengehalten ist und das Einrichtungen (53, 55) besitzt, die seine automatische Schließung im Falle eines anormalen Abfalls dieses Betriebsdrucks (U) bewirken, wodurch das Aufhängungselement von der Druckquelle getrennt wird.

8. Niveauregulierungsvorrichtung nach Anspruch 7, dadurch gekennzeichnet, daß in dem Körper (39) und in der Buchse (41) Kanäle (49, 51) vorgesehen sind, die mit der Hydraulikkammer (7) des Kolbens (8) des Aufhängungselements und mit der Druckquelle (P) verbunden sind und die zu einem ventil (B) führen, das normalerweise durch den Druck (P) der Hydraulikquelle offengehalten wird und das mit Finrichtungen zu seiner automatischen Schließung bei Abfall des Drucks (P) in der Hydraulikkammer (7) versehen ist, wodurch das Aufhängungselement (P) von der Hydraulikquelle getrennt wird.

## Claims

1. A height regulating device for a suspension element of a heavy vehicle of the type comprising an arm (4) traversed by a corresponding wheel axle (5) articulated on a part (3) fixed to the chassis of the vehicle and wherein there is arranged a hydraulic chamber (7) containing a piston (8) whereon there is articulated a rod (11) whose end on the opposite side to the piston (8) is articulated on the said fixed part (3), intended to be placed in a recess (2) arranged internally in the part (3) of this element fixed to the chassis of the vehicle, characterised in that this regulating device (1) is a hydraulic distributor comprising a control valve (23) rotatably mounted in a body (39), disposed in the said recess (2), this control valve (23) passing through a jacket (41) wherein a hydraulic circuit is formed, as well as in the body, allowing hydraulic liquid to be introduced into, or withdrawn from the chamber (7) of the piston (8), depending on the angular position of the control valve (23) within the jacket (41), the angular position of this latter within the body (39) determining a preset value for the ground clearance of the chassis of the vehicle, and the control valve (23) is provided with means (34) for actuating rotation, associated with the arm (4) and the chassis, the assembly being constructed so as to adjust the ground clearance automatically to the preset value by the angular position of the jacket (41).

2. A regulating device according to Claim 1, characterised in that the control valve (23) cooperates with two pistons (63, 64) slidably mounted in corresponding hydraulic chambers of the jacket (41), which on the one hand, each communicate with a check valve (69, 71) elastically urged onto its seat in the position of closing a duct (73), provided with a constriction (28) connecting the two valves and which on the other hand, are interconnected by a line (25), the elastic check valves being provided with stems (67, 68) elastically urged to bear against the control valve (23) on either side of the latter so as to maintain it normally in the median position, and the two above mentioned pistons (64, 64) are also each provided with a bearing element (61, 62) on either side of the control valve (23), the assembly of this hydraulic control circuit being arranged in such a way that a rotation of the control valve (23) in one direction or the other successively produces a displacement of one of the pistons (63, 64), and the opening of a check valve against its elastic restoring element in such a way that any displacement of the control valve (23) produces a controlled circulation of the hydraulic fluid in the said line (25) and that only the rapid return into position of the control valve (23) produces an additional controlled circulation of the hydraulic fluid through the duct (73) and its constriction (28).

3. A regulating device according to Claim 2, characterised in that each of the connecting lines (25, 73) between the hydraulic chambers (65, 66) and between the check valves (69, 71) is provided with a constriction (26, 28) adapted to filter the rapid oscillations of the control valve (23).

4. A regulating device according to one of Claims 1 to 3, characterised in that the control valve (23) cooperates with the piston (63, 64) and with the stems of the check valves (69, 71) by projecting wings (32a, 32b) radially fixed at one of its ends forming an actuating end part (32), and on the opposite lateral faces whereof the stems (67, 68) of the check valves (69, 71), as well as stems (61, 62) integral with the pistons (63, 64) come to bear, the pistons being pushed towards the bearing faces by the hydraulic pressure.

5. A regulating device according to one of Claims 1 to 4, characterised in that the jacket (41) is integral with a pin (42) projecting outside the body (39) and whose angular position determines a preset value of the ground clearance of the vehicle, provision being, moreover, made for stop means to limit the rotation of the jacket (41), for instance, a pin (75) fixed internally in the body (39), and which slides in a corresponding circular groove (76) of the jacket (41).

6. A regulating device according to one of Claims 1 to 5, characterised in that the means (34) for actuating the rotation of the control valve (23) comprise two fingers (80, 77) tightly gripped by a spring (78), whereof one is integral with the arm (4) and the chassis of the vehicle, whilst the spring (78) is fixed to the corresponding end of the control valve, in such a way that the rotation of this latter can be actuated by these two fingers (80, 77) and by the spring (78) in one direction or the other.

7. A regulating device according to one of Claims 1 to 6, characterised in that in the body (39) and in the jacket (41), lines (46, 47, 48, 49, 51) are arranged, connecting the source of the hydraulic pressure (P) to the chamber (7) of the piston of the suspension element associated with the regulating device, and one, (47, 48) of these lines is provided with a check valve (A) normally kept open by the utilisation pressure (U) in the

**0 197 858**

hydraulic chamber (7) and which comprises means (53) (55) actuating its automatic closure in the case of an abnormal drop of this utilisation pressure (U), in this case isolating the suspension element from the pressure source.

8. A regulating device according to Claim 7, characterised in that lines (49, 51) are arranged in the body (39) and in the jacket (41), which communicate respectively with the hydraulic chamber (7) of the piston (8) of the suspension element and with the source of pressure (P) and which issue in a check valve (B) normally kept open by the pressure (P) of the hydraulic source, and this check valve (B) is equipped with automatic closing means in the case of a drop in the pressure (P) in the hydraulic chamber (7) of the suspension element of the hydraulic source.

FIG.1

FIG.2

0197858

FIG.3

## FIG.5

## FIG.9

## FIG.4

0 197 858

FIG.6

FIG.7

FIG.8